# EUROPÄISCHE PATENTSCHRIFT

(11) **EP 3 397 870 B1**
(45) Veröffentlichungstag und Bekanntmachung des Hinweises auf die Patenterteilung: **24.07.2019**
(21) Anmeldenummer: 16801778.8
(22) Anmeldetag: 28.11.2016
(51) Int. Cl.: F16C 33/28

(54) **GLEITLAGER MIT VERSCHLEISSÜBERWACHUNG UND ZUGEHÖRIGES VERFAHREN**
SLIDING BEARING WITH WEAR MONITORING AND ASSOCIATED METHOD
PALIER LISSE AVEC SURVEILLANCE D'USURE ET PROCÉDÉ CORRESPONDANT

(30) Priorität: 04.04.2016 DE 102016106112
(43) Veröffentlichungstag der Anmeldung: 07.11.2018
(73) Patentinhaber: Federal-Mogul Deva GmbH, 35260 Stadtallendorf (DE)
(72) Erfinder: MAUS, Jan-Ulrich, 35274 Kirchhain (DE); ENGELHARDT, Wolfgang, 35085 Hachborn (DE)
(74) Vertreter: Becker Kurig Straus
(86) Internationale Anmeldenummer: PCT/EP2016/078948
(87) Internationale Veröffentlichungsnummer: WO 2017/174167

(56) Entgegenhaltungen:
- EP-A1- 3 045 749
- EP-A2- 1 148 261
- DE-A1- 19 925 460
- DE-A1-102004 010 348
- DE-A1-102008 018 776
- DE-A1-102014 000 641
- DE-U1- 20 104 695
- US-A1- 2009 140 840

## Beschreibung

### Gebiet der Erfindung

Die Erfindung betrifft ein Gleitlager mit einer Gleitschicht, wobei das Gleitlager weiter mit einer Anordnung zur Verschleißüberwachung versehen ist. Weiter wird ein Verfahren zur Verschleißüberwachung eines Gleitlagers bereitgestellt.

### Stand der Technik

Es sind verschiedene Techniken und Systeme bekannt, um den Verschleiß von unterschiedlichen Bauteilen während des Betriebs anzuzeigen. Zum Beispiel kann in die Verschleißschicht, etwa eines Bremsbelags, ein dünner Draht eingearbeitet sein, der aus der Verschleißschicht herausgeführt wird und mittels einer Steckverbindung an die Überwachung angeschlossen wird. Ist die Verschleißschicht hinreichend abgenutzt, also z.B. der Bremsbelag weit genug an die Verschleißgrenze heruntergebremst, wird der Draht beschädigt und die damit einhergehende Widerstandsänderung bzw. Unterbrechung im Stromkreis kann angezeigt werden.

Solche Lösungen haben den Nachteil, dass bei der Montage zusätzliche Arbeitsschritte zum Anschließen der Verschleißüberwachung notwendig sind. Außerdem sind herausgeführte Verbindungsleitungen und Anschlüsse anfällig für Beschädigungen.

DE 20104695 U1 offenbart ein Lagerelement, das neben einer Messbohrung zur Verschleißüberwachung einen Datenträger, insbesondere einen Transponder, der in einer Tasche angeordnet ist, aufweist. DE 102004010348 A1 betrifft eine Verschleißerfassung durch Transponderzerstörung bei mechanischem Verschleiß ausgesetzten Maschinenbauteilen.

Es besteht Bedarf nach einer Verschleißüberwachung für Gleitlager, bei welcher keine zusätzlichen Arbeitsschritte notwendig sind und welche robust gegenüber Beschädigungen ist.

### Zusammenfassung der Erfindung

Erfindungsgemäß wird das Problem gelöst durch ein Gleitlager gemäß Anspruch 1, ein Verfahren zur Herstellung eines Gleitlagers gemäß Anspruch 13 und ein Verfahren zur Verschleißüberwachung eines Gleitlagers gemäß Anspruch 16. Abhängige Ansprüche betreffen bevorzugt Ausführungsformen.

Das Gleitlager umfasst eine Gleitschicht, die eine verschleißanfällige Gleitfläche aufweist; und einen Transponder, der mit der Gleitschicht verbunden ist und sich bei unverschlissener Gleitfläche in einem vorbestimmten Abstand von der Gleitfläche erstreckt. Die Gleitschicht weist einen Faserverbundwerkstoff auf, wobei der Transponder zwischen Fasern des Faserverbundwerkstoffs angeordnet ist.

Dabei wird im Rahmen der vorliegenden Erfindung unter dem Begriff Transponder allgemein ein Funkkommunikationsgerät verstanden, das eingehende Signale aufnimmt und automatisch beantwortet. Darunter fallen insbesondere RFID-Transponder. Ein Transponder kann weiter ebenfalls Sensoren umfassen, die mit anderen Sende- und Empfangsgeräten bzw. Techniken arbeiten. Es gibt aktive Transponder mit eigener Stromversorgung und passive Transponder, die von der aufgenommenen Energie betätigt werden.

Zur Identifizierung von Objekten, etwa von Objekten in einem Lager oder bei der Haustierregistrierung oder bei Chipkarten für ein Zugangskontrollsystem, kommen verschiedenste Transponder und/oder Sensoren zum Einsatz, unter anderem auch RFID-Systeme (Radio Frequency Identification). Ein RFID-System besteht aus einem Lesegerät, das ein starkes elektromagnetisches Feld erzeugt, und einem Transponder, der eine Antenne und einen Mikrochip mit einem Datenspeicher umfasst, wobei der Transponder durch Modulation des Sendefeldes die Information aus dem Datenspeicher an das Lesegerät überträgt. Der klassische RFID-Transponder sendet nicht aktiv, sondern verändert nur seine Antennen-Impedanz. Diese Veränderung wird vom Lesegerät erkannt. Der Transponder bezieht seine Energie entweder aus dem vom Lesegerät erzeugten elektromagnetischen Feld (passive RFID-Transponder), oder er hat eine eigene Energieversorgung (semi-passive/semiaktive RFID-Transponder, die den Mikrochip mit Energie aus einer etwaige Batterie versorgen, und aktive RFID-Transponder, die die Energie auch für das Erzeugen des modulierten Rücksignals nutzen).

Gemäß einem weiteren Aspekt kann das Gleitlager eine Tragschicht umfassen, die an der Gleitschicht befestigt ist.

In einem weiteren Aspekt der vorliegenden Erfindung kann das Gleitlager mit mindestens einer außenliegenden Markierung versehen sein, welche die Position des Transponders kennzeichnet.

Gemäß einem weiteren Aspekt kann der Transponder als ein im Wesentlichen flaches Bauteil ausgeführt sein, mit einer Maximal-Höhe von 0,2 mm bis 2 mm, einer Breite von 5 mm bis 50 mm und einer Länge von 5 mm bis 100 mm.

Gemäß einem weiteren Aspekt kann der Transponder biegbar sein.

Gemäß einem weiteren Aspekt kann eine der Seitenflächen des Transponders innerhalb der Gleitschicht im Wesentlichen parallel/tangential zur Gleitfläche verlaufen und einen vorbestimmten Abstand zur Gleitfläche der Gleitschicht aufweisen, wobei die Höhe des Transponders im Wesentlichen senkrecht zu der innerhalb der Gleitschicht verlaufenden Seitenfläche des Transponders steht.

Gemäß einem weiteren Aspekt kann der Transponder im Hochfrequenzbereich (HF), d.h. etwa 3 - 30 MHz, oder im Ultrahochfrequenzbereich (UHF), d.h. etwa 0,3 - 3 GHz arbeiten.

Gemäß einem weiteren Aspekt kann der Transponder Daten enthalten, welche den Transponder eindeutig identifizieren und/oder der Transponder kann kennzeichnende Daten des Gleitlagers enthalten.

Gemäß einem weiteren Aspekt kann der Transponder weiter einen Temperatursensor und/oder einen Drucksensor und/oder einen Beschleunigungssensor aufweisen, dessen gemessene Daten durch den Transponder ausgegeben werden können.

Gemäß einem weiteren Aspekt kann mindestens eine zusätzliche Antenne zur Verstärkung des Transpondersignals am Gleitlager angeordnet sein.

Gemäß einem weiteren Aspekt können mehrere Transponder in die Gleitschicht des Gleitlagers eingebettet sein.

Gemäß einem weiteren Aspekt können die Gleitschicht und/oder die Tragschicht im Wesentlichen eine Zylinderform aufweisen.

Gemäß einem anderen Aspekt kann die Gleitschicht und/oder die Tragschicht einen Faserverbundwerkstoff aufweisen, wobei der Transponder zwischen Fasern des Faserverbundwerkstoffs angeordnet sein kann.

Weiter wird das Problem erfindungsgemäß gelöst durch ein Verfahren zur Herstellung eines Gleitlagers mit einer Anordnung zur Verschleißüberwachung, umfassend Wickeln eines in Kunstharz getränkten Kunststofffadens bis zu einer Schichtdicke, die gleich einem vorbestimmten Abstand ist; Anordnen eines Transponders auf der gewickelten Schicht; weiteres Wickeln des in Kunstharz getränkten Kunststofffadens auf dem rotierenden Dorn bis eine weitere Schicht mit einer Dicke, die gleich der Differenz von Gesamt-Dicke und vorbestimmten Abstand ist, erreicht ist; Aushärten des Kunstharzes.

Gemäß einem weiteren Aspekt kann das Verfahren weiter das Wickeln einer in Kunstharz getränkten Glas- oder Kohlefaser um die Gleitschicht vor dem Aushärten umfassen.

Gemäß einem weiteren Aspekt kann das Verfahren weiter das Anbringen einer Markierung umfassen, welche kennzeichnend für die Position des Transponders ist.

Erfindungsgemäß wird weiter ein Verfahren zur Verschleißüberwachung eines Gleitlagers zur Verfügung gestellt, umfassend das Bereitstellen eines Gleitlagers; das Anordnen des Gleitlagers, wobei das Gleitlager mit Hilfe der außenliegenden Markierung so ausgerichtet wird, dass sich der Transponder im Lastbereich des Gleitlagers befindet; und wiederholtes Überprüfen ob der Transponder funktionsfähig ist, mit einem geeigneten Lesegerät.

### Kurze Beschreibung der Zeichnung

Im Folgenden werden beispielhafte Ausführungsformen der Erfindung unter Bezug auf die Figuren genauer beschrieben, wobei
Figuren 1a, 1b, 1c jeweils eine Querschnittsansicht eines Ausschnitts einer Gleitschicht zeigen;
Figur 2 ein Gleitlager mit darin gelagerter Welle zeigt;
Figur 3 ein Gleitlager der einen Faserverbundwerkstoff aufweist zeigt;
Figur 4 ein zylinderförmiges Gleitlager in einer Querschnittsansicht zeigt.

### Ausführliche Beschreibung der Erfindung

Im Folgenden werden beispielhafte Ausführungsformen der Erfindung anhand der Figuren beschrieben. Die Figuren sollen dabei die Struktur der jeweiligen Ausführungsformen verdeutlichen, sie sind jedoch nicht notwendigerweise maßstabsgetreu. Insbesondere werden sich im Allgemeinen die Größenverhältnisse und die Formen der Bauteile von den in den Figuren gezeigten unterscheiden. Zwar werden in den Figuren nur flache bzw. zylinderförmige Gleitlager(ausschnitte) dargestellt, es ist jedoch möglich die vorliegende Erfindung ebenfalls bei anderen Formen anzuwenden.

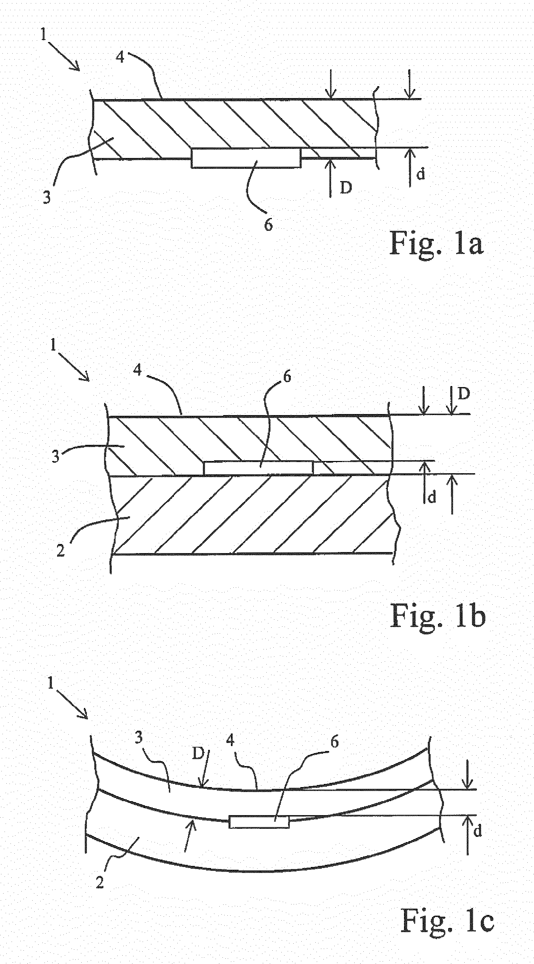

Figur 1a zeigt einen Ausschnitt einer Gleitschicht 3 eines Gleitlagers 1 gemäß einer Ausführungsform der vorliegenden Erfindung in einer Querschnittsansicht. Ein Transponder 6 ist mit der Gleitschicht 3 so verbunden, dass er zum Teil in die Gleitschicht 3 eingebettet ist, aber zum Beispiel bei hinreichend dicker Gleitschicht und hinreichend dünnem Transponder auch vollständig in der Gleitschicht eingebettet sein kann. In der Figur ist nur ein Querschnitt des Lagers zu sehen. Der Transponder 6 wird sich im Allgemeinen, abhängig von den Abmessungen des Lagers und des Transponders, nicht über die ganze Länge, welche zur Zeichenebene senkrecht steht, des Gleitlagers 1 erstrecken. Das zu lagernde Element (nicht gezeigt) liegt auf der Gleitfläche 4 auf. Der Transponder 6 erstreckt sich von einem vorbestimmten Abstand d zur Gleitfläche 4 an in eine Richtung weg von der Gleitfläche 4 innerhalb der Gleitschicht 3 und eventuell über die Gleitschicht hinaus, dabei kann die Funktionsfähigkeit des Transponders mittels eines geeigneten Lesegeräts überprüft werden.

Bei Benutzung des Gleitlagers 1 wird die Gleitschicht 3 von der Gleitfläche 4 ausgehend verschlissen, die Dicke der Gleitschicht verringert sich also ausgehend von der Gleitfläche und der Abstand zum Transponder 6 nimmt ab. Ist ein hinreichender Verschleiß eingetreten wird der Transponder 6 zerstört, er wird also auf Abfragen durch ein Lesegerät nicht mehr antworten. Der Abstand d des Transponders 6 von der unverschlissenen Gleitschicht 3 wird so gewählt, dass der Transponder 6 zerstört wird bevor die Gleitschicht 3 vollständig verschlissenen ist, so dass also noch eine gewisse Sicherheitsreserve an Gleitschicht vorhanden ist. Da sich der Transponder 6 vorzugsweise nicht über die gesamte Länge, d.h. senkrecht zur Zeichenebene, erstreckt, ist auch in dieser Richtung noch etwas Gleitschicht vorhanden. Somit kann durch wiederholtes Abfragen des Transponders 6 sichergestellt werden, dass noch genügend Gleitschicht 3 für einen sicheren Betrieb ohne eventuelle Zerstörung von Maschinenbauteilen vorhanden ist. Gibt der Transponder 6 keine Antwort auf Abfragen durch ein Lesegerät mehr, muss davon ausgegangen werden, dass die Gleitschicht bald, d.h. nach einem Zeitraum, der durch die aufgrund der Anordnung des Transponders gegebene Restdicke der Gleitschicht und die Verschleißgeschwindigkeit bestimmt ist, aufgebraucht ist und entsprechend ein baldiger Wechsel des Gleitlagers empfehlenswert ist.

Beträgt die Gesamtdicke D der Gleitschicht 3 zum Beispiel 1 mm, und sind die obigen Bedingungen bezüglich des Zerstörtwerdens des Transponders 6 und des Bestehens einer Restgleitschicht erfüllt wenn der Transponder 0,2 mm in die Gleitschicht hineinragt, so wird der Abstand d von der unverschlissenen Gleitfläche 0,8 mm vorbestimmt. Bei einer anderen Dicke D der Gleitschicht wird der Abstand d entsprechend angepasst, ist D z.B. gleich 2 mm, wird der Abstand d mit 1,8 mm vorbestimmt.

Vorteilshaft bei der Verwendung eines Transponders 6 ist, dass keine Verbindungen, wie z.B. elektrisch leitende Drähte, nach außen gelegt und an andere Überwachungsgeräte angeschlossen werden müssen, was beim Einbau zusätzliche Arbeitsschritte zur Folge hat. Zur Verschleißüberwachung eines Gleitlagers 1 der vorliegenden Erfindung ist hingegen lediglich ein geeignetes Lesegerät nötig, das mit dem Transponder mittels eines Funksignals kommuniziert. Da keine Verbindungen nach außen nötig sind ist es insbesondere möglich den Transponder geschützt einzubauen, so dass eine Beschädigung, etwa eine abgerissene elektrische Leitung, der Anordnung zur Verschleißüberwachung ausgeschlossen ist. Auch ist die Verschleißüberwachung eines an einer unzugänglich verbauten Gleitlagers ohne weiteres möglich.

Der Transponder 6 enthält beispielsweise kennzeichnende Daten, die ihn eindeutig identifizieren. Damit ist dann indirekt auch eine eindeutige Identifizierung des Gleitlagers 1, in das der Transponder eingebaut ist möglich. Sollten also in einer Maschine mehrere Lager eingebaut sein, kann bei Verschleiß eines Gleitlagers 1 sofort festgestellt werden, welches betroffen ist. Weiter kann der Transponder 6 auch kennzeichnende Daten des Gleitlagers 1 beinhalten, in dem er verbaut ist. Diese Daten können zum Beispiel den Typ des Gleitlagers, die genauen Abmessungen oder Produktionscharge umfassen.

Weiter kann in einer Ausführungsform der Transponder 6 mit Sensoren versehen sein, welche Parameter erfassen, die den Verschleiß beeinflussen. Dies kann etwa ein Drucksensor sein, da die Verschleißgeschwindigkeit insbesondere von der dem durch die aufliegende Last ausgeübten Druck abhängt, oder auch ein Temperatursensor, da sich die Materialeigenschaften und damit auch der Verschleiß abhängig von der Betriebstemperatur sein können. Damit kann ebenso überprüft werden, ob das Gleitlager 1 innerhalb der vorgegebenen Betriebsspezifikation verwendet wird. Mit Hilfe eines Beschleunigungssensors können Vibrationen im Lager festgestellt werden. Ein etwaiger unrunder Lauf einer gelagerten Welle kann so erkannt werden. Zusammen mit weiteren Betriebsparametern, etwa der Rotationsgeschwindigkeit einer gelagerten Welle, kann damit gegebenenfalls auch eine Schätzung für die mögliche Betriebsdauer, d.h. des Zeitraums währenddessen die Gleitschicht vollständig verschlissen wird, zu berechnen, etwa durch ein im Lesegerät vorhandenes Computerprogramm (Applikation). Im Falle eines passiven Transponders können die Sensordaten nur zum Zeitpunkt der jeweiligen Abfrage erfasst werden. Sollen die Daten hingegen auch zu anderen Zeitpunkten erfasst werden, muss der Transponder mit einer eigenen Energieversorgung (Batterie) ausgestattet sein.

Verwendet werden beispielsweise handelsübliche Transponder, die im Kurzwellenbereich beziehungsweise im Dezimeterwellenbereich arbeiten, d.h. mit Frequenzen von etwa 3 bis 30 MHz beziehungsweise von etwa 0,3 bis 3 GHz. Die damit erreichten Reichweiten liegen im Bereich von etwa einem halben Meter bis zu einigen Metern. In der ISO-Norm ISO/IEC 18000 werden unterschiedliche RFID-Technologien, die in verschiedenen Frequenzbereichen arbeiten, beschrieben.

Bevorzugt werden im Handel erhältliche relativ flache Transponder mit gedruckter Antenne verwendet. Diese haben den Vorteil, dass sie meist biegbar sind und also an eine nicht ebene Gleitfläche angepasst werden können. Weiter werden bevorzugt Transponder verwendet mit einer Maximal-Höhe von 0,2 mm bis 2 mm, einer Breite von 5 mm bis 50 mm und einer Länge von 5 mm bis 100 mm, bevorzugt mit einer Maximal-Höhe von 0,3 mm bis 1 mm, einer Breite von 10 mm bis 30 mm und einer Länge von 10 mm bis 50 mm, weiter bevorzugt mit einer Maximal-Höhe von 0,4 mm bis 0,6 mm, einer Breite von 10 mm bis 20 mm und eine Länger von 10 mm bis 30 mm. Hierbei haben die Transponder im Allgemeinen nicht exakt die Form eines Quaders, sondern können zum Beispiel in bestimmten Bereichen Erhebungen aufweisen, z.B. in einem mittigen Bereich relativ dick und in einem Außenbereich relativ dünn sein. Die Form kann relativ beliebig sein - es gibt zum Beispiel auch zylinderförmige Transponder - und ist insbesondere auch durch die Sendeeigenschaften bestimmt. Obige Angaben sind also so zu verstehen, dass der jeweilige Transponder in einen Quader mit den oben angegebenen Abmessungen einbeschrieben werden kann.

In Figur 1b ist beispielhaft an der Gleitschicht 3 weiter eine Tragschicht 2 befestigt. Diese dient insbesondere der Stabilisierung einer eventuell dünnen Gleitschicht 3. Gleichzeitig wird sichergestellt, dass der Transponder 6 vollständig in dem Gleitlager 1 eingebettet ist, und somit vor Beschädigungen geschützt ist. Ebenso erstreckt sich hier beispielshaft der Transponder 6 gerade bis an den äußeren Rand der Gleitschicht 3. Er könnte jedoch auch vollständig in die Gleitschicht eingebettet sein, oder sich über diese wie in Figur 1a hinauserstrecken.

Figur 1c zeigt einen Ausschnitt eines Gleitlagers 1 gemäß einer weiteren Ausführungsform der vorliegenden Erfindung in einer Querschnittsansicht. Hier ist die Gleitfläche 4 des Gleitlagers 1 bogenförmig, d.h. es wird zum Beispiel ein Ausschnitt eines (halb)zylinderförmigen Gleitlagers für eine zu lagernde Welle gezeigt. Der Abstand d ist hier durch den Abstand des Transponders 6 zu einer Tangente an die Gleitfläche 4 gegeben. Ebenso wie in Figur 1b ist auch hier an der Gleitschicht 3 eine Tragschicht 2 befestigt. Zwar steht in der Figur 1c der Transponder 6 über die Gleitschicht hinaus, er kann jedoch auch vollständig in die Gleitschicht eingebettet sein.

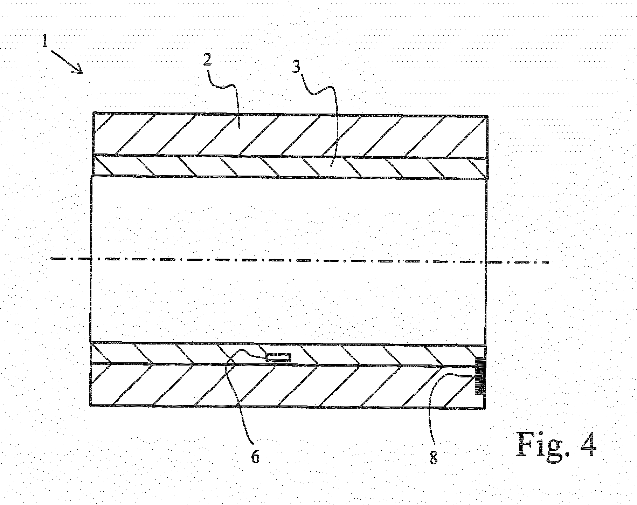

Da das Signal des Transponders 6, insbesondere eines passiven, zum Teil recht schwach sein kann, ist es weiter möglich eine Antenne 8 am Gleitlager 1 anzuordnen. Diese kann das Transpondersignal verstärken und so gewährleisten, dass zuverlässig ein Signal mit einem geeigneten Lesegerät innerhalb einer bestimmten Entfernung, beispielsweise ca. 1 m, empfangen werden kann. Eine beispielhafte Ausführungsform eines Gleitlagers 1 mit Antenne 8 ist in Figur 4 dargestellt. Dabei handelt es sich um eine Schnittdarstellung eines zylinderförmigen Lagers, wobei die Schnittebene durch die Mittelachse des Zylinders verläuft. Natürlich kann auch an nicht zylinderförmigen Gleitlagern eine Antenne angebracht werden. Das zylinderförmige Gleitlager 1 besteht aus einer Gleitschicht 3 und einer Tragschicht 2. Ein Transponder 6 ist hier vollständig in die Gleitschicht 3 eingebettet. Selbstverständlich kann der Transponder auch nur teilweise in die Gleitschicht eingebettet sein. An einer Stirnseite des Lagers ist eine Antenne 8 angeordnet. In diesem Falle ist die Antenne 8 beispielhaft in eine Aussparung an einer Stirnseite des Lagers eingesetzt. Die Antenne kann z.B. die Form einer Scheibe, mit einem Durchmesser von ca. 5 mm und einer Dicke von ca. 2 mm, aufweisen. Eine andere Form bzw. Größe der Antenne 8 ist natürlich, wie auch eine andere Anordnung am Gleitlager, möglich. Ebenso kann das Gleitlager 1 wieder mit einer Markierung, in Figur 4 nicht dargestellt, zur Kennzeichnung der Lage des Transponders 6 versehen sein. Weitergehend ist es möglich mehrere Antennen am Gleitlager anzubringen, um in verschiedene Richtungen eine Verstärkungswirkung erhalten zu können; dies ist zum Beispiel hilfreich, wenn das in eine Maschine eingebaute Lager auf einer Seite durch andere Maschinenbauteile abgeschirmt wird. Die Antenne kann direkt mit dem Transponder verbunden sein, was aber nicht zwingend erforderlich sein muss. Des Weiteren kann eine Zusatzantenne mit einer eigenen Energieversorgung ausgestattet sein (i.d.R. genügt eine Zusatzantenne ohne eigene Energieversorgung).

Eine weitere Ausgestaltungsmöglichkeit besteht darin, mehrere Transponder in der Gleitschicht 3 anzuordnen. Die unterschiedliche Anordnung kann dabei etwa verschiedene Abstände von der Gleitfläche 4 betreffen, oder auch mehrere über die Fläche verteilte Transponder betreffen, letzteres ist hilfreich wenn die Last ungleichmäßig auf der Fläche verteilt ist und somit ein ungleichmäßiger Verschleiß auftritt.

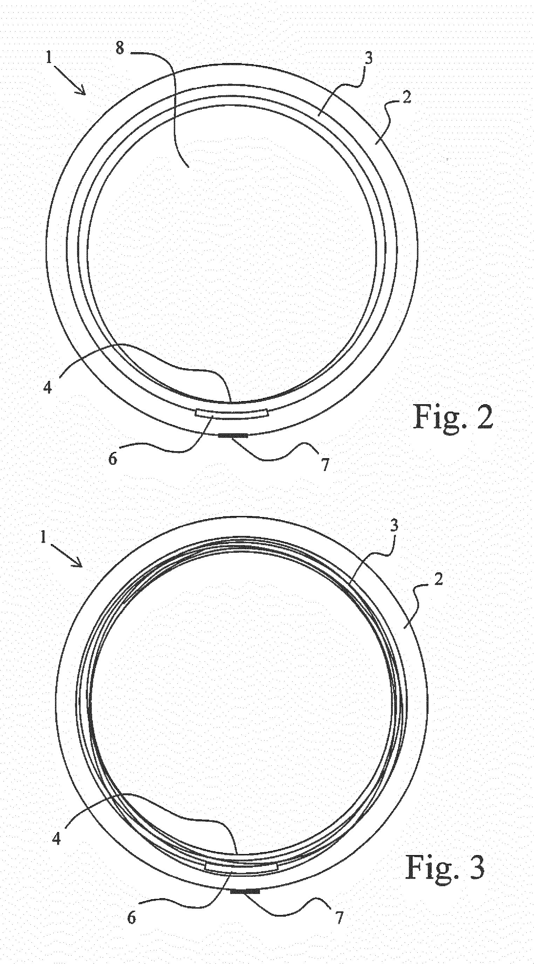

In Figur 2 ist eine beispielhafte Ausführungsform eines zylinderförmigen Gleitlagers 1 für eine zu lagernde Welle 8 dargestellt. Es wird wieder eine Querschnittsansicht gezeigt, wobei hier, wie auch in Figur 3, der Übersichtlichkeit wegen auf eine Schraffur der Schnittflächen verzichtet wurde. In dieser Ausführungsform ist der Transponder 6 beispielsweise biegsam, so dass er der Form der Gleitschicht 3 folgt und so einen größeren Bereich parallel zu der Gleitfläche 4 abdeckt; es ist jedoch ebenfalls, wie z.B. in Figur 1c gezeigt, der Einsatz eines ebenen Transponders möglich. Auch hier wird sich der Transponder 6 vorzugsweise nicht über die Gesamtlänge des Gleitlagers 1 (senkrecht zur Zeichenebene) erstrecken, es wird also auch im relativ schmalen Auflagebereich der Welle 8 noch Gleitmaterial außerhalb des der vom Transponder bedeckten Fläche vorhanden sein, um einen Weiterlauf zu gewährleisten. Natürlich braucht auch hier der Transponder 6 nicht über die Gleitschicht 3 hinauszustehen, es ist gegebenenfalls, d.h. bei entsprechenden Dicken der Gleitschicht und des Transponders, auch möglich den Transponder vollständig in die Gleitschicht einzubetten. Weiter ist eine Tragschicht 2 an der Gleitschicht 3 befestigt, der einen zusätzlichen Schutz für den Transponder bildet.

Weiter wird in Figur 2 eine Markierung 7 gezeigt, die am Gleitlager 1 angebracht ist. Zwar ist in der Figur die Markierung am Außenumfang des Gleitlagers 1 in der Nähe des Transponders 6 angebracht, jedoch kann die Markierung auch an einer anderen, von außen sichtbaren, Stelle des Gleitlagers 1 angebracht sein. Möglichkeiten sind hier zum Beispiel eine andere Stelle am Außenumfang des Gleitlagers, eine Stelle an einer Stirnseite des Gleitlagers oder auch am Innenumfang des Gleitlagers, d.h. an der Gleitfläche. Die Markierung 7 soll in einer festen Relation zum Transponder 6 stehen, so dass sich die Position des Transponders von der Position der Markierung ableiten lässt. Eine solche Markierung kann verwendet werden, um das Gleitlager beim Einbau so anzuordnen, dass sich der Transponder im Lastbereich, in welchem der größte Verschleiß zu erwarten ist, befindet. Im in der Figur gezeigten Beispiel wäre das etwa die Auflagefläche der Welle 8 im Ruhezustand.

Ein zylinderförmiges Gleitlager kann zum Beispiel als Faserverbundwerkstoff ausgeführt sein, d.h. die Gleitschicht 3 basiert auf einem faserverstärktem Kunststoff mit einer Kunststoffmatrix und einem Kunststofffaden als Verstärkungselement. Die Gleitschicht setzt sich zumeist aus speziellen nicht oder wenig abrasiven Kunststofffasern oder -fäden als Verstärkungselemente, Festschmierstoffen und einer Epoxydharzmatrix zusammen. Weiter ist die Gleitschicht selbstschmierend, als Festschmierstoff ist unter anderem der Einsatz von PTFE (Polytetrafluorethylen) oder Graphit bekannt. Diese Substanzen werden entweder in Partikelform der Kunststoffmatrix beigemischt oder im Fall von PTFE in Form eines Filaments zusammen mit anderen Kunststofffilamenten zu dem Kunststofffaden der Gleitschicht verzwirnt. Eine ähnliche Gleitschicht ist aus der Patentanmeldung EP 1900950 A2 bekannt. Als Fadenkunststoff wird im Übrigen bekanntermaßen meist Polyester eingesetzt. Ebenso kann eine Tragschicht als Faserverbundwerkstoff ausgeführt sein, welcher typischerweise durch eine glasfaser- oder kohlefaserverstärkte Epoxydharzmatrix gekennzeichnet ist, die ein sehr hohes Lastaufnahmevermögen aufweist.

Sowohl die Gleitschicht 3 als auch der Tragschicht 2 des Gleitelements werden durch Aufwickeln des mit Kunstharz getränkten Kunststofffadens bzw. der mit Kunstharz getränkten Glasfaser auf einen rotierenden Dorn (Wickelkern) in Form eines mehrschichtigen rotationssymmetrischen Körpers hergestellt. Die so erzeugten Rohre mit Kreisquerschnitt werden nach Aushärten der Kunststoffmatrix zu zylindrischen Buchsen, halbkreisförmigen Lagerschalen und dergleichen weiter verarbeitet. Standardmäßige Abmessungen so hergestellter zylinderförmiger Gleitlager befinden sich in einem Innen-Durchmesserbereich von etwa 15 - 500 mm und in einem Längenbereich von etwa 15 - 200 mm. Dabei beträgt die Dicke der Gleitschicht etwa 0,5 - 5 mm. Die Wand-Dicke der zylinderförmigen Tragschicht liegt bei etwa 2 - 20 mm.

Die Herstellung eines erfindungsgemäßen Gleitlagers 1 kann dann beispielsweise wie im Folgenden beschrieben erfolgen. Ein mit Kunstharz getränkter Kunststofffaden wird zunächst auf einem rotierenden Dorn bis zu einer Schichtdicke, die gleich dem vorbestimmten Abstand d ist, aufgewickelt. Ein Transponder 6 wird dann an dieser Schicht angeordnet, wobei der Transponder vorzugsweise die Form eines dünnen, flachen, biegbaren Bauteils aufweist. Mit dem Wickeln des Kunststofffadens wird dann fortgefahren bis eine Gesamtdicke der Gleitschicht 3 erreicht ist. Dabei wird der Transponder 6 mit überwickelt, womit der Transponder zwischen Fasern (Kunststofffäden) eingebettet wird, der Transponder 6 befindet sich dann sozusagen zwischen verschieden Lagen des Faserverbundwerkstoffs der Gleitschicht 3.

Eine als Faserverbundwerkstoff ausgeführte, und an der Außenseite der Gleitschicht 3 angebrachte, Tragschicht 2, kann gegebenenfalls erzeugt werden, indem eine in Kunstharz getränkte Glas- oder Kohlefaser um die Gleitschicht 3 gewickelt wird, so wird eine glasfaser- oder kohlefaserverstärkte Epoxydharzmatrix als Tragschicht 2 erhalten. Etwaige Unebenheiten, die sich an der Außenfläche der Gleitschicht 3 durch das Einwickeln des Transponders 6 ergeben, können dadurch ausgeglichen werden, so dass die Außenumfangsfläche des Gleitlagers 1 eine Zylinderform aufweist.

Für ein so hergestelltes Gleitlager kann zum Beispiel ein Transponder mit einer Höhe von ca. 0,5 cm und einer Grundfläche von ca. 2 x 2 cm verwendet werden. Versuche haben ergeben, dass ein solcher die zum Aushärten des Faserverbundwerkstoffs notwendige Temperatur von etwa 180 °C über den notwendigen Zeitraum von etwa 3 Stunden übersteht und dass ein Signal von dem Transponder nach dem Aushärten erhalten wird.

Eine beispielhafte Ausführungsform, die nach diesem Verfahren hergestellt wurde ist in Figur 3 gezeigt. Diese unterscheidet sich von der in Figur 2 dargestellten Ausführungsform im Wesentlichen dadurch, dass die Gleitschicht 3 aus einem Faserverbundwerkstoff besteht, wobei die Fasern symbolhaft dargestellt wurden. Der Transponder 6 ist in den Faserverbundwerkstoff eingewickelt/eingebettet. Dabei wird der Transponder 6 im Allgemeinen nicht wie in der Figur gezeigt einen rechteckigen Querschnitt aufweisen, sondern zum Beispiel in der Mitte etwas höher sein und am Rand relativ flach auslaufen, so dass er ohne eventuelle Hohlräume eingewickelt werden kann. Natürlich kann auch die Tragschicht 2 aus einem Faserverbundwerkstoff gebildet sein. Auch kann eine außenliegende Markierung 7 zu Kennzeichnung der Lage des Transponders 6 angebracht werden, die Markierung kann im Allgemeinen an einer beliebigen Stelle an dem Gleitlager 1 angebracht sein, wichtig ist nur, dass aus der Position der Markierung die Position des Transponders abgeleitet werden kann. Vorzugsweise wird eine Stelle gewählt, die auch nach Einbau des Lagers noch sichtbar ist, so dass die richtige Lage überprüft werden kann.

Beispielsweise wird bei einem Standardlager mit einem Innendurchmesser von 70 mm und einer Gleitschichtdicke D von 1 mm zunächst eine Schicht mit einer Dicke von 0,8 mm gewickelt. Der Transponder 6 wird dann angebracht um mit dem Wickeln fortgesetzt bis eine weitere Schicht mit einer Dicke von 0,2mm aufgetragen wurde. Ist die gewünschte Gleitschichtdicke D z.B. 2 mm, wird beispielsweise zunächst eine Schicht von 1,8 mm gewickelt, danach wird der Transponder angebracht und dann eine weitere Schicht von 0,2 mm gewickelt.

Weiter wird das mit dem beschriebenen Verfahren hergestellte Gleitlager 1 an einer Außenfläche bevorzugt mit einer Markierung 7 versehen, die in fester Relation zu der Position des Transponders 6 steht und aus der sich die Position des eingebetteten Transponders 6 ableiten lässt.

Das obig beschriebene Herstellungsverfahren betrifft ein Gleitlager aus einem Faserverbundwerkstoff. Denkbar ist jedoch auch das folgende Verfahren: Auf einer Tragschicht, z.B. aus Stahl, wird zunächst ein Transponder angeordnet; nachfolgend wird das Material der Gleitschicht, das z.B. Bronze aufweist, aufgepulvert, so dass der Transponder umschlossen wird; abschließend wird die Gleitschicht gesintert. Eine Markierung, welche die Position des Transponders kennzeichnet, kann gegebenenfalls auch angebracht werden. Analog denkbar ist auch, dass ein Transponder in eine Kunststoffgleitschicht eingegossen wird. Es ist weiterhin denkbar, dass der Transponder in eine entsprechend tiefe Aussparung ausgehend von der Tragschicht eingesetzt bzw. verklebt wird. Die Aussparung wurde vorher fertigungstechnisch erzeugt und muss bis in die Gleitschicht reichen. Bei dieser Variante besteht der Nachteil, dass die ausgesparte Fläche für den Transponder in der Anwendung als Tragfläche wegfällt und zusätzliche Arbeitsschritte anfallen.

Ein Verfahren zur Verschleißüberwachung eines Gleitlagers 1 gemäß der vorliegenden Erfindung umfasst dann zunächst den Einbau eines bereitgestellten Gleitlagers, wobei der Transponder unter Zuhilfenahme der Markierung 7 im Lastbereich des Lagers angeordnet wird. Mit einem geeigneten Lesegerät wird dann wiederholt überprüft, ob vom Transponder auf Abfragen noch Signale erhalten werden. Antwortet der Transponder 6 nicht mehr, muss davon ausgegangen werden, dass die Gleitschicht 3 mindestens bis zum Transponder 6 verschlissen ist. Die Zeitpunkte des Überprüfens der Funktionsfähigkeit des Transponders können zum Beispiel in regelmäßigen Zeitintervallen gewählt sein, sie können sich aber auch an der erwarteten Lebensdauer der Gleitschicht bzw. Abbaugeschwindigkeit der Gleitschicht bei gegebener Belastung orientieren, also z.B. häufiger vorgenommen werden wenn erwartet wird, dass die Gleitschicht bald vollständig verschlissen sein wird.

## Patentansprüche

1. Gleitlager (1) mit Anordnung zur Verschleißüberwachung, umfassend
eine Gleitschicht (3), die eine verschleißanfällige Gleitfläche (4) aufweist,
einen Transponder (6), der mit der Gleitschicht (3) verbunden ist;
wobei sich der Transponder (6) bei unverschlissener Gleitfläche (4) in einem vorbestimmten Abstand (d) von der Gleitfläche (4) erstreckt, und der Transponder (6) zumindest teilweise in die Gleitschicht (3) eingebettet ist;
**dadurch gekennzeichnet, dass** die Gleitschicht (3) einen Faserverbundwerkstoff aufweist, wobei der Transponder (6) zwischen Fasern des Faserverbundwerkstoffs angeordnet ist.

2. Gleitlager (1) gemäß Anspruch 1, weiter umfassend eine Tragschicht (2), die an der Gleitschicht (3) befestigt ist.

3. Gleitlager (2) gemäß Anpruch 2, wobei die Tragschicht (2) aus einem Faserverbundwerkstoff gebildet ist.

4. Gleitlager (1) gemäß einem der vorstehenden Ansprüche, wobei der Transponder (6) als ein im Wesentlichen flaches Bauteil ausgeführt ist, mit einer Maximal-Höhe von 0,2 mm bis 2 mm, einer Breite von 5 mm bis 50 mm und einer Länge von 5 mm bis 100 mm.

5. Gleitlager (1) gemäß einem der vorstehenden Ansprüche, wobei der Transponder (6) biegbar ist.

6. Gleitlager (1) gemäß Anspruch 5, wobei eine der Seitenflächen des Transponders (6) innerhalb der Gleitschicht (3) im Wesentlichen parallel/tangential zur Gleitfläche (4) verläuft und einen vorbestimmten Abstand (d) zur Gleitfläche (4) der Gleitschicht (3) aufweist, wobei die Höhe des Transponders im Wesentlichen senkrecht zu der innerhalb der Gleitschicht (3) verlaufenden Seitenfläche des Transponders (6) steht.

7. Gleitlager (1) gemäß einem der vorstehenden Ansprüche, wobei der Transponder (6) im Hochfrequenzbereich (HF), d.h. etwa 3 - 30 MHz, oder im Ultrahochfrequenzbereich (UHF), d.h. etwa 0,3 - 3 GHz, arbeitet.

8. Gleitlager (1) gemäß einem der vorstehenden Ansprüche, wobei der Transponder (6) weiter einen Temperatursensor und/oder einen Drucksensor und/oder einen Beschleunigungssensor aufweist, dessen gemessene Daten durch den Transponder (6) ausgegeben werden können.

9. Gleitlager (1) gemäß einem der vorstehenden Ansprüche, wobei mindestens eine zusätzliche Antenne (8) zur Verstärkung des Transpondersignals am Gleitlager (1) angeordnet ist.

10. Gleitlager (1) gemäß einem der vorstehenden Ansprüche, wobei mehrere Transponder (6) in die Gleitschicht (3) des Gleitlagers (1) eingebettet sind.

11. Gleitlager (1) gemäß einem der vorstehenden Ansprüche, wobei die Gleitschicht (3) und/oder die Tragschicht (2) im Wesentlichen eine Zylinderform aufweisen.

12. Gleitlager (1) gemäß einem der vorstehenden Ansprüche, aufweisend mindestens eine außenliegende Markierung (7), welche die Position des Transponders (6) kennzeichnet.

13. Verfahren zur Herstellung eines Gleitlagers (1) mit Anordnung zur Verschleißüberwachung **gekennzeichnet durch**:
Wickeln eines in Kunstharz getränkten Kunststofffadens bis zu einer Schichtdicke, die gleich einem vorbestimmten Abstand (d) ist;
Anordnen eines Transponders (6) auf der gewickelten Schicht;
weiteres Wickeln des in Kunstharz getränkten Kunststofffadens auf dem rotierenden Dorn bis eine weitere Schicht mit einer Dicke, die gleich der Differenz von Gesamt-Dicke (D) und vorbestimmten Abstand (d) ist, erreicht ist;
Aushärten des Kunstharzes.

14. Verfahren gemäß Anspruch 13 weiter umfassend
Wickeln einer in Kunstharz getränkten Glas- oder Kohlefaser um die Gleitschicht (3) vor dem Aushärten.

15. Verfahren gemäß einem der Ansprüche 13 oder 14 weiter umfassend Anbringen einer Markierung (7), welche kennzeichnend für die Position des Transponders (6) ist.

16. Verfahren zur Verschleißüberwachung eines Gleitlagers (1), umfassend Bereitstellen eines Gleitlagers (1) gemäß Anspruch 12;
Anordnen des Gleitlagers (1);
**gekennzeichnet durch**
Ausrichten des Gleitlagers (1) mit Hilfe der außenliegenden Markierung (7), so dass sich der Transponder (6) im Lastbereich des Gleitlagers befindet; und
wiederholtes Überprüfen Funktionsfähigkeit des Transponder (6) mit einem geeigneten Lesegerät.

## Claims

1. A slide bearing (1) with a system for wear monitoring, comprising
a sliding layer (3) having a sliding surface (4) that is susceptible to wear,
a transponder (6) that is connected to the sliding layer (3) ;
wherein for an unworn sliding surface (4) the transponder (6) extends at a predetermined distance (d) from the sliding surface (4), and the transponder (6) is at least partially embedded in the sliding layer (3);
**characterized in that** the sliding layer (3) contains a fiber composite, wherein the transponder (6) is situated between fibers of the fiber composite.

2. The slide bearing (1) according to Claim 1, further comprising a support layer (2) that is affixed to the sliding layer (3).

3. The slide bearing (1) according to Claim 2, wherein the support layer (2) is made of a fiber composite.

4. The slide bearing (1) according to one of the preceding claims, wherein the transponder (6) is designed as an essentially flat component having a maximum height of 0.2 mm to 2 mm, a width of 5 mm to 50 mm, and a length of 5 mm to 100 mm.

5. The slide bearing (1) according to one of the preceding claims, wherein the transponder (6) is bendable.

6. The slide bearing (1) according to Claim 5, wherein one of the side surfaces of the transponder (6) extends within the sliding layer (3) essentially parallel/tangentially with respect to the sliding surface (4) and has a predetermined distance (d) from the sliding surface (4) of the sliding layer (3), wherein the height of the transponder is essentially perpendicular to the side surface of the transponder (6) extending within the sliding layer (3).

7. The slide bearing (1) according to one of the preceding claims, wherein the transponder (6) operates in the high frequency range (HF), i.e., approximately 3-30 MHz, or in the ultrahigh frequency range (UHF), i.e., approximately 0.3-3 GHz.

8. The slide bearing (1) according to one of the preceding claims, wherein the transponder (6) also has a temperature sensor and/or a pressure sensor and/or an acceleration sensor whose measured data may be output by the transponder (6).

9. The slide bearing (1) according to one of the preceding claims, wherein at least one additional antenna (8) for amplifying the transponder signal is situated on the slide bearing (1).

10. The slide bearing (1) according to one of the preceding claims, wherein multiple transponders (6) are embedded in the sliding layer (3) of the slide bearing (1).

11. The slide bearing (1) according to one of the preceding claims, wherein the sliding layer (3) and/or the support layer (2) have/has an essentially cylindrical shape.

12. The slide bearing (1) according to one of the preceding claims, having at least one exterior marking (7) that identifies the position of the transponder (6).

13. A method for manufacturing a slide bearing (1) with a system for wear monitoring, **characterized by**:
winding a plastic thread that is impregnated with synthetic resin up to a layer thickness that is equal to a predetermined distance (d);
arranging a transponder (6) on the wound layer;
further winding the plastic thread, impregnated with synthetic resin, on the rotating mandrel until a further layer having a thickness that is equal to the difference between the overall thickness (D) and the predetermined distance (d) is reached;
curing the synthetic resin.

14. The method according to Claim 13, further comprising winding a glass fiber or carbon fiber impregnated with synthetic resin around the sliding layer (3) prior to the curing.

15. The method according to one of Claims 13 or 14, further comprising
applying a marking (7) that is characteristic of the position of the transponder (6).

16. A method for wear monitoring of a slide bearing (1), comprising
providing a slide bearing (1) according to Claim 12; arranging the slide bearing (1);
**characterized by**
aligning the slide bearing (1) with the aid of the exterior marking (7) so that the transponder (6) is situated in the load region of the slide bearing; and repeatedly checking the functionality of the transponder (6), using a suitable reading device.

## Revendications

1. Palier lisse (1) muni d'un dispositif de surveillance d'usure, comprenant
une couche de glissement (3) présentant une surface de glissement (4) sensible à l'usure,
un transpondeur (6) relié à la couche de glissement (3) ;
dans lequel, lorsque la surface de glissement (4) est usée, le transpondeur (6) s'étend à une distance prédéterminée (d) de la surface de glissement, et le transpondeur (6) est intégré au moins en partie dans la couche de glissement (3) ;
**caractérisé en ce que** la couche de glissement (3) présente un matériau renforcé par des fibres, le transpondeur (6) étant disposé entre les fibres du matériau renforcé par des fibres.

2. Palier lisse (1) selon la revendication 1, comprenant en outre une couche de support (2) fixée à la couche de glissement (3).

3. Palier lisse (2) selon la revendication 2, dans lequel la couche de support (2) est formée à partir d'un matériau renforcé par des fibres.

4. Palier lisse (1) selon l'une quelconque des revendications précédentes, dans lequel le transpondeur (6) est réalisé sous la forme d'un composant substantiellement plat d'une hauteur maximale de 0,2 mm à 2 mm, d'une largeur de 5 mm à 50 mm et d'une longueur de 5 mm à 100 mm.

5. Palier lisse (1) selon l'une quelconque des revendications précédentes, dans lequel le transpondeur (6) est flexible.

6. Palier lisse (1) selon la revendication 5, dans lequel l'une des surfaces latérales du transpondeur (6) s'étend à l'intérieur de la couche de glissement (3) substantiellement en parallèle/ tangentiellement à la surface de glissement (4) et présente une distance prédéterminée (d) par rapport à la surface de glissement (4) de la couche de glissement (3), la hauteur du transpondeur étant substantiellement perpendiculaire à la surface latérale du transpondeur (6) s'étendant à l'intérieur de la couche de glissement (3).

7. Palier lisse (1) selon l'une quelconque des revendications précédentes, dans lequel le transpondeur (6) fonctionne dans la plage des radiofréquences (RF), c'est-à-dire environ de 3 à 30 MHz, ou dans la plage des fréquences ultra-hautes fréquences (UHF), c'est-à-dire environ de 0,3 à 3 GHz.

8. Palier lisse (1) selon l'une quelconque des revendications précédentes, dans lequel le transpondeur (6) présente en outre un capteur de température et/ou un capteur de pression et/ou un capteur d'accélération dont les données mesurées peuvent être sorties par le transpondeur (6).

9. Palier lisse (1) selon l'une quelconque des revendications précédentes, dans lequel au moins une antenne (8) supplémentaire pour amplifier le signal de transpondeur est disposée sur le palier lisse (1).

10. Palier lisse (1) selon l'une quelconque des revendications précédentes, dans lequel plusieurs transpondeurs (6) sont intégrés dans la couche de glissement (3) du palier lisse (1).

11. Palier lisse (1) selon l'une quelconque des revendications précédentes, dans lequel la couche de glissement (3) et/ou la couche de support (2) présentent substantiellement une forme cylindrique.

12. Palier lisse (1) selon l'une quelconque des revendications précédentes, présentant au moins un repère situé à l'extérieur (7) qui identifie la position du transpondeur (6).

13. Procédé de fabrication d'un palier lisse (1) muni d'un dispositif de surveillance d'usure, **caractérisé par** les étapes consistant à :
enrouler un fil de matière plastique trempé dans une résine synthétique jusqu'à une épaisseur de couche égale à une distance prédéterminée (d) ;
disposer un transpondeur (6) sur la couche enroulée ;
continuer à enrouler le fil de matière plastique trempé dans une résine synthétique sur le mandrin tournant jusqu'à atteindre une couche supplémentaire d'une épaisseur égale à la différence entre l'épaisseur totale (D) et la distance prédéterminée (d) ;
laisser durcir la résine synthétique.

14. Procédé selon la revendication 13, comprenant en outre le fait d'enrouler une fibre de verre ou de carbone trempée dans une résine synthétique autour de la couche de glissement (3) avant de laisser durcir.

15. Procédé selon l'une quelconque des revendications 13 ou 14, comprenant en outre le fait d'apposer un repère (7) identifiant la position du transpondeur (6).

16. Procédé de surveillance d'usure d'un palier lisse (1), comprenant les étapes consistant à
fournir un palier lisse (1) selon la revendication 12 ; mettre en place le palier lisse (1) ;
**caractérisé par** les étapes consistant à
aligner le palier lisse (1) à l'aide du repère situé à l'extérieur (7) de sorte que le transpondeur (6) se trouve dans la plage de charge du palier lisse ; et
répéter le contrôle de la fonctionnalité du transpondeur (6) avec un lecteur approprié.
